Europäisches Patentamt

**European Patent Office**

Office européen des brevets

(19)

(11) Veröffentlichungsnummer: **0 306 475**
**B1**

(12) **EUROPÄISCHE PATENTSCHRIFT**

(45) Veröffentlichungstag der Patentschrift:
**10.01.90**

(51) Int. Cl.⁴: **F 16 H 45/02**

(21) Anmeldenummer: **85904623.7**

(22) Anmeldetag: **13.09.85**

(86) Internationale Anmeldenummer:
**PCT/EP 85/00463**

(87) Internationale Veröffentlichungsnummer:
**WO 86/01870 (27.03.86 Gazette 86/7)**

(54) **STEUEREINRICHTUNG FÜR EINEN DREHMOMENTWANDLER MIT ÜBERBRÜCKUNGSKUPPLUNG.**

(30) Priorität: **20.09.84 PC /EP84/002 90**

(43) Veröffentlichungstag der Anmeldung:
**15.03.89 Patentblatt 89/11**

(45) Bekanntmachung des Hinweises auf die Patenterteilung:
**10.01.90 Patentblatt 90/2**

(84) Benannte Vertragsstaaten:
**DE FR GB IT SE**

(56) Entgegenhaltungen:
**FR-A- 2 483 649**
**FR-A- 2 499 000**
**GB-A- 2 081 413**
**US-A- 4 448 293**

(73) Patentinhaber: **ZAHNRADFABRIK FRIEDRICHSHAFEN AKTIENGESELLSCHAFT, Löwentaler Strasse 100 Postfach 2520,**
**D-7990 Friedrichshafen 1 (DE)**

(72) Erfinder: **GIERER, Georg, Seestrasse 29,**
**D-7993 Kressbronn (DE)**

(74) Vertreter: **Raue, Reimund, Zahnradfabrik Friedrichshafen AG Löwentaler Strasse 100 Postfach 2520,**
**D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Steuereinrichtung für einen Drehmomentwandler mit Überbrückungskupplung in einem hydrodynamisch-mechanischen Verbundgetriebe, insbesondere für Kraftfahrzeuge, nach dem Oberbegriff von Anspruch 1.

Aus der GB-A 20 81 413 (= DE-A 31 30 871) ist eine solche Steuereinrichtung bekannt, in der über Impulssignale mit Hilfe einer Steuereinheit 134 ein Magnetventil 132 geöffnet und geschlossen wird, so dass eine Steuerventileinheit 52 über Druckfluid eine Reibungskupplungseinheit 8 steuert. Damit wird aber eine vorgegebene Drehzahldifferenz einer Eingangs- und einer Ausgangswelle gesteuert.

Aus der DE-OS 31 03 838 ist bekannt, mit einem kombinierten Druck- und Wegeventil die Befüllung des Drehmomentwandlers, die Zu- und Abschaltung der Wandlerüberbrückungskupplung, einen Kühlerkreislauf und die Schmiermittelversorgung für das mechanische Getriebe zu steuern.

Solche Einrichtungen haben sich bewährt, weil sie trotz der vielfältigen zu erfüllenden Funktionen einfach im Aufbau sind.

Mit einer weiteren Verbesserung der Schaltqualität, insbesondere bei Automatgetrieben, die mit einer elektro-hydraulischen Steuereinrichtung ausgestattet sind, befriedigte diese Lösung bei der Zuschaltung der Überbrückungskupplung nicht mehr, so dass in der Leitung für den Funktionsdruck, der im Druck- und Wegeventil die Schaltung der Wandlerüberbrückungskupplung bewirkt, in bekannter Weise noch ein Dämpfer angeordnet wurde, der eine weichere Schliessung der Wandlerüberbrückungskupplung bewirkte.

Trotz einer erheblichen Verbesserung bei der Wandlerüberbrückung war damit die Schaltung in gleicher Qualität bei der Öffnung der Wandlerkupplung noch unbefriedigend.

Es ist deshalb Aufgabe der Erfindung, eine Steuereinrichtung nach dem Oberbegriff von Anspruch 1 mit einem möglichst geringen Aufwand zu verbessern, dass auch beim Lösen der Wandlerkupplung keine Schaltstösse mehr auftreten.

Diese Aufgabe wird mit den kennzeichnenden Merkmalen von Anspruch 1 erfüllt.

Mit der modulierten Zu- und Abschaltung des Funktionsdruckes mit Hilfe des Magnetventils, sowohl für die Bildung des Wandlerdruckes wie auch für die Betätigung der Wandlerüberbrückungskupplung, kann ein ruckfreier Wechsel zwischen der Tätigkeit des Drehmomentwandlers und dessen Überbrückung in einfacher Weise erzielt werden. Auch die Anordnung des Puls-Modulations-Verfahrens beim Zuschalten des Funktionsdruckes und der Anwendung in Umkehrung beim Abschalten führt zu einer im Aufbau einfachen Steuereinrichtung.

Während nach dem Stand der Technik für diese Aufgabe neben dem Magnetventil ein relativ kompliziertes und kombiniertes Wandlerdruck- und Wegeventil und eine Drossel nur das gesteuerte Schliessen der Wandlerkupplung bewirkt, genügen für das gesteuerte Öffnen und Schliessen nur zwei relativ einfache Steuerventile in Verbindung mit dem im Prinzip unveränderten Magnetventil und dessen einfacher Steuerung in einer an und für sich schon vorhandenen elektronischen Einheit für z. B. die Motorbeeinflussung.

Mit den Ansprüchen 2 bis 5 ist die Erfindung in vorteilhafter Weise weiter ausgestaltet.

Die funktionelle (Anspruch 2-4) und die konstruktive (Anspruch 5) Ausgestaltung unterstreicht in einem Ausführungsbeispiel die relativ einfache Lösung des Problems.

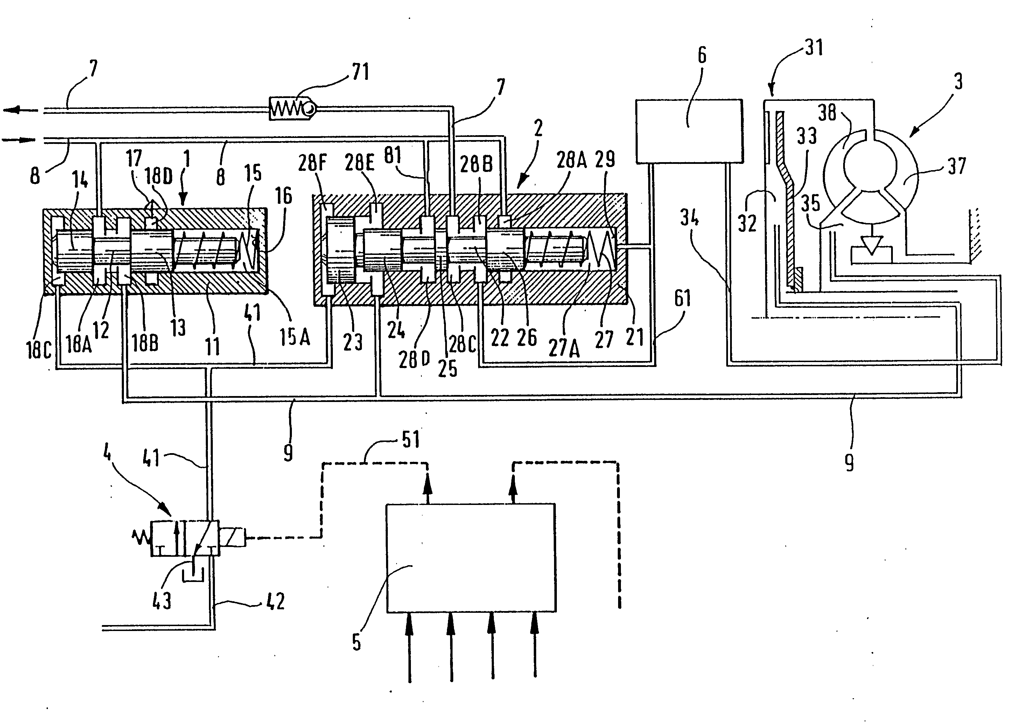

Weitere Einzelheiten der Erfindung werden anhand von einem Ausführungsbeispiel und einer Zeichnung erläutert, wobei die Einzelheiten der Zeichnung Gegenstand der Erfindung sind.

Es zeigen:

Die Figur ein Ausführungsbeispiel der Steuereinrichtung.

Es ist ein Wandlerdruckventil 1 mit einem Ventilkörper 11 und einem Kolbenschieber 12 mit nur zwei Steuerkolben 13, 14 und einer Feder 15 angeordnet. Über eine Systemdruckleitung 8 wird Druck in einen Ringraum 18 A geleitet und in Abhängigkeit von den Stirnflächen der Steuerkolben 13 und 14 und der Feder 15 reduziert und über den Ringraum 18 B und die Wandlerdruckleitung 9 sowohl dem Wandlerkupplungsventil 2 wie auch dem Wandler 3 zu dessen Befüllung über den Kolbenraum 32 zugeleitet. Der Ventilkörper 11 hat noch einen 3. Ringraum 18 C, in den eine Funktionsdruckleitung 41 führt. Ein 4. Ringraum 18 D ist mit dem Entlüftungskanal 17 verbunden.

Im Wandlerkupplungsventil 2 mit einem Ventilkörper 21 und einem Kolbenschieber 22 mit vier Steuerkolben 23, 24, 25, 26 ist noch eine Feder 27 angeordnet. Die Systemdruckleitung 8 führt einmal direkt in einen 1. Ringraum 28 A und noch einmal über eine Drossel 81 in einen 4. Ringraum 28 D. Der 2. Ringraum 28 B ist über die Leitung 61 mit dem Kühler 6 und dem Federraum 27 A verbunden. Der 3. Ringraum 28 C hat über eine Leitung 7 und ein Kugelventil 71 eine Verbindung mit dem Schmiersystem des mechanischen Getriebes. Der 5. Ringraum 28 E ist mit der Wandlerdruckleitung 9 und der 6. Ringraum 28 F mit der Funktionsdruckleitung 41 verbunden.

Der Drehmomentwandler 3 hat eine Wandlerüberbrückungskupplung 31, diese wird befüllt über die Wandlerdruckleitung 9, die in den Kolbenraum 32 führt, wobei dieser Druck gleichzeitig die Wandlerüberbrückungskupplung offenhält. Die Ableitung des im Wandlerbetrieb erhitzten Mediums erfolgt aus dem Arbeitsraum 35 über die Druckleitung 34 und den Kühler 6 in das Schmiersystem des mechanischen Getriebes.

Zum Magnetventil 4 führt eine Druckmittelzuführleitung 42, und die abgehende Funktionsdruckleitung 41 führt sowohl zum Wandlerdruck 1 wie auch zum Wandlerkupplungsventil 2. Über eine Steuerleitung 51 von der elektronischen Einheit 5 zum Magnetventil 4 erfolgt die in einer vorbestimmten Periodendauer getaktete Schaltung des Magnetventils 4.

Die gesteuerte Schaltung der Wandlerüberbrückungskupplung wirkt wie folgt:

Im geöffneten Zustand der Wandlerüberbrückungskupplung 31 fliesst das Druckmedium von dem nicht dargestellten Systemdruckventil über die Systemdruckleitung 8 zum Ringraum 18 A des Wandlerdruckventils 1. Über die Differenzflächen der Steuerkolben 13, 14 in Zusammenwirken mit der Feder 15 wird dieser Druck reduziert und über die Wandlerdruckleitung 9 aus dem Ringraum 18 B zum Kolbenraum 32 der Wandlerüberbrückungskupplung 31 und von dort zur Befüllung in den Arbeitsraum 35 des Drehmomentwandlers geleitet. Die Wandlerüberbrückungskupplung 31 wird dabei offengehalten und das über das Pumpenrad 37 eingeleitete Drehmoment wird in bekannter Weise gewandelt auf die Turbine 38 übertragen. Der Abfluss des erhitzten Mediums aus dem Arbeitsraum 35 erfolgt über die Druckleitung 34 zum Kühler 6 und von dort über die Leitung 61 und in dieser Stellung der verbundenen Ringräume 28 B und 28 C des Wandlerkupplungsventils 2 in die Leitung 7, die zum Schmiersystem des mechanischen Getriebes führt.

Das Schliessen der Wandlerüberbrückungskupplung 31 wird z. B. in Abhängigkeit vom Motor und Getriebeabgangsdrehzahl von der elektronischen Einheit 5 eingeleitet. Über eine Steuerleitung 51 wird ein Magnetventil 4 im Puls-Modulations-Verfahren so geschaltet, dass sich in der Funktionsdruckleitung 41 relativ langsam ein Druck aufbaut. Dabei schaltet z. B. das Magnetventil 4 zwischen seinen beiden stabilen Zuständen „voll geschlossen" und „voll geöffnet" im Takt einer konstanten Pulsfrequenz hin und her, während das Verhältnis der Öffnungszeit zur Schliesszeit in Abhängigkeit vom Steuersignal verändert wird. Um das Magnetventil 4 wird dabei z. B. von der Endstellung „voll geschlossen" in Abhängigkeit vom Steuersignal in die Endstellung „voll geöffnet" gebracht.

Der sich aufbauende Funktionsdruck in der Funktionsdruckleitung 41, der über den Ringraum 18 C auf den Steuerkolben 14 wirkt, verschiebt den Kolbenschieber 12 des Wandlerdruckventils 1 gegen den Druck der Feder 15 nach rechts, so dass der Ringraum 18 A verschlossen und die Ringräume 18 B und 18 D verbunden und damit die Wandlerdruckleitung 9 über den Entlüftungskanal 17 entlüftet wird. Die Verschiebung des Kolbenschiebers 12 und die Entlüftung der Wandlerdruckleitung 9 erfolgt dabei in Abhängigkeit vom Druckaufbau in der Funktionsdruckleitung.

Da der Funktionsdruck parallel zum Wandlerdruckventil 1 auch dem Wandlerkupplungsventil 2 zugeleitet wird, erfolgt in analoger Weise die Verschiebung des Kolbenschiebers 22. Dabei wird der Ringraum 28 A und 28 B verbunden, so dass der Systemdruck aus der Systemdruckleitung 8 über die Leitung 61, den Kühler 6 und die Druckleitung 34 in den Arbeitsraum 35 des Drehmomentwandlers 3 gelangt und gleichzeitig in Abhängigkeit vom Druckaufbau in der Funktionsdruckleitung 41 die Wandlerüberbrückungskupplung schliesst und dann auch geschlossen hält.

Bei geschlossener Wandlerüberbrückungskupplung 31 erfolgt die Schmierung des mechanischen Getriebes über den gedrosselten (Drossel 81) Systemdruck aus der Systemdruckleitung 8 und die verbundenen Ringräume 28 D, 28 C des Wandlerkupplungsventils 2.

Die Verschiebung der Kolbenschieber 12, 22, sowohl des Wandlerdruckventils 1 wie des Wandlerkupplungsventils 2, wird an den Anschlägen 16 und 29 begrenzt.

Das Steuersignal für die Schliessung des Magnetventils 4 und damit für die Öffnung der Wandlerüberbrückungskupplung 31 kommt wieder von der elektronischen Einheit 5 über die Steuerleitung 51. Dabei wird das Magnetventil 4 in der beschriebenen Weise jedoch umgekehrt gesteuert, so dass der Funktionsdruck in der Funktionsdruckleitung 41 abgebaut wird. In Abhängigkeit davon wird die Wandlerüberbrückungskupplung 31 langsam geöffnet, weil das Wandlerdruck- (1) und das Wandlerkupplungsventil (2) in gleicher Abhängigkeit infolge des Druckes der Federn 15, 27 in ihre beschriebene Ausgangsstellung zurückgeführt werden.

*Bezugszeichen*

| | |
|---|---|
| 1 | Wandlerdruckventil |
| 11 | Ventilkörper |
| 12 | Kolbenschieber |
| 13 | Steuerkolben |
| 14 | Steuerkolben |
| 15 | Feder |
| 15 A | Federraum |
| 16 | Anschlag |
| 17 | Entlüftungskanal |
| 18 A | Ringraum |
| 18 B | Ringraum |
| 18 C | Ringraum |
| 18 D | Ringraum |
| 2 | Wandlerkupplungsventil |
| 21 | Ventilkörper |
| 22 | Kolbenschieber |
| 23 | Steuerkolben |
| 24 | Steuerkolben |
| 25 | Steuerkolben |
| 26 | Steuerkolben |
| 27 | Feder |
| 27 A | Federraum |
| 28 A | Ringraum |
| 28 B | Ringraum |
| 28 C | Ringraum |
| 28 D | Ringraum |
| 28 E | Ringraum |
| 28 F | Ringraum |
| 3 | Drehmomentwandler |
| 31 | Wandlerüberbrückungskupplung |
| 32 | Kolbenraum |
| 33 | Kolben |
| 34 | Druckleitung |
| 35 | Arbeitsraum |
| 36 | Lamellen |
| 37 | Pumpenrad |
| 38 | Turbinenrad |
| 4 | Magnetventil |
| 41 | Funktionsdruckleitung |

42 Druckmittelzuführleitung
43 Entlüftungsleitung
5 Elektronische Einheit
51 Steuerleitung
6 Kühler
61 Leitung
7 Schmiersystem
71 Kugelventil
8 Systemdruckleitung
81 Drossel
9 Wandlerdruckleitung

**Patentansprüche**

1. Steuereinrichtung für einen Drehmomentwandler (3) mit Überbrückungskupplung (31) und einem Schmiermittelkreislauf (7) eines hydrodynamischen, mechanischen Verbundgetriebes, in der ein Funktionsdruck über eine Steuerventileinrichtung die Befüllung des Drehmomentwandlers (3) bzw. die Schliessung der Wandlerüberbrückungskupplung (31) bewirkt, wobei ein von einer elektronischen Einheit (5) im Puls-Modulations-Verfahren beaufschlagtes Magnetventil (4) den Steuerdruck der Steuerventileinrichtung beeinflusst, dadurch gekennzeichnet, dass zwischen dem Magnetventil .(4) und dem Drehmomentwandler (3) je ein mit Systemdruck (Systemdruckleitung 8) beaufschlagtes Wandlerdruck-(1) und Wandlerkupplungsventil (2) angeordnet ist, und dass beide Ventile über eine gemeinsame, vom Magnetventil (4) kommende Funktionsdruckleitung (41) zur Befüllung des Drehmomentwandlers (3) und zur Schaltung der Wandlerüberbrückungskupplung (31) gesteuert werden, und dass die Zu- und Abschaltung des Magnetventils (4) im Puls-Modulations-Verfahren erfolgt, so dass der Funktionsdruck sich verzögert auf- und auch verzögert abbaut und die Wandlerüberbrückungskupplung (31) weich öffnet und schliesst.

2. Steuereinrichtung nach Anspruch 1, dadurch gekennzeichnet, dass bei entlüfteter Funktionsdruckleitung (41) das Wandlerdruckventil (1) den Systemdruck (Systemdruckleitung 8) reduziert und an den Drehmomentwandler (3) zu dessen Befüllung und zum Öffnen und Offenhalten der Wandlerüberbrückungskupplung (31) leitet, der Rückfluss des Wandlermediums über den Kühler (6) und das Wandlerkupplungsventil (2) in das Schmiersystem (7) des mechanischen Getriebes erfolgt.

3. Steuereinrichtung nach Anspruch 1, dadurch gekennzeichnet, dass bei einem sich aufbauenden Funktionsdruck in der Funktionsdruckleitung (41) und in Abhängigkeit davon, dass
– das Wandlerdruckventil (1) die Systemdruckleitung (8) abschliesst und die Druckleitung (9) zum Drehmomentwandler (3) entlüftet,
– das Wandlerkupplungsventil (2) den Systemdruck über den Kühler (6) in den Arbeitsraum (35) des Drehmomentwandlers (3) leitet und die Wandlerkupplung (31) schliesst sowie eine Verbindung vom gedrosselten Systemdruck (Drossel 81) zum Schmiersystem (7) herstellt.

4. Steuereinrichtung nach Anspruch 1, dadurch gekennzeichnet, dass bei einem sich absenkenden Funktionsdruck und in Abhängigkeit davon,
– das Wandlerdruckventil (1) die Entlüftung des Drehmomentwandlers (3) verschliesst und den modulierten Systemdruck dem Drehmomentwandler (3) zuführt und dabei die Wandlerüberbrückungskupplung (31) öffnet,
– das Wandlerkupplungsventil (2) den Systemdruck absperrt und den Rückfluss des Mediums vom Drehmomentwandler (3) über den Kühler (6) in das Schmiersystem (7) des mechanischen Getriebes öffnet.

5. Steuereinrichtung nach Anspruch 1, dadurch gekennzeichnet, dass eine elektronische Einheit (5), ein Magnetventil (4), ein Wandlerdruckventil (1) und Wandlerkupplungsventil (2) und eine mit einer Überbrückungskupplung (31) versehener Drehmomentwandler (3) angeordnet sind, dass das Wandlerdruckventil (1) in einem Gehäuse (11) mit vier Ringräumen (18 A bis 18 D) und einem Federraum (15 A), einem Kolbenschieber (12) mit zwei Steuerkolben (13, 14) und eine auf diesem geführte Feder (15) und das Wandlerkupplungsventil in einem Gehäuse (21) mit sechs Ringräumen (28 A bis 28 F) und einem Federraum (27 A), ein Kolbenschieber (22) mit vier Steuerkolben (23, 24, 25, 26) und eine auf diesem geführte Feder (27) aufweist und wie folgt miteinander verbunden sind:
– die elektronische Einheit (5) über eine Steuerleitung (51) mit dem Magnetventil (4),
– das mit einer Druckmittelzuführleitung (42) und einer Entlüftungsleitung (43) versehene Magnetventil (4) über eine Funktionsdruckleitung (41) mit dem Ringraum (18 C) des Wandlerdruckventils (1) und einem Ringraum (28 F) des Wandlerkupplungsventiles (2),
– das mit einer Entlüftungsleitung (17, Ringraum 18 D) und einer Systemdruckleitung (8, Ringraum 18 A) verbundene Wandlerdruckventil (1) über eine Druckleitung (9) mit dem Ringraum (28 E) des Wandlerkupplungsventils (2) und einem Kolbenraum (32) der Wandlerüberbrückungskupplung (31) im Drehmomentwandler (3),
– das mit einer Systemdruckleitung (8, Ringraum 28 A) direkt, einer gedrosselten (Drossel 81, Ringraum 28 D) Systemdruckleitung und einem Schmiersystem (7, Ringraum 28 C) für das mechanische Getriebe verbundene Wandlerkupplungsventil (2) über die Leitung (61) aus dem Ringraum (28 B) mit dem Federraum (27 A) und über den Kühler (6) mit dem Arbeitsraum (35) des Drehmomentwandlers (3).

**Claims**

1. Control system for a torque converter (3) comprising a bridging clutch (31) and a lubricant circuit (7) of an hydrodynamic, mechanical compound transmission, in which a functional pressure is effective in filling the torque converter (3) and closing the converter bridging clutch (31) via a control valve facility, whereby a solenoid valve (4) acted upon by an electronic unit (5) by means of pulse modulation influences the control pressure of the control valve facility, characterised in that a converter pressure valve (1) and a converter clutch valve (2) each acted upon by system pressure (system pressure line 8) are arranged respectively between solenoid valve (4) and torque converter (3) and in that both valves are controlled via a common functional pressure line (41) coming from the solenoid valve (4) for filling the torque converter (3) and for operating the converter bridging clutch (31) and that connection and disconnection of the solenoid valve (4) is effected by pulse modulation so that functional pressure both builds and drops at a delay and the converter bridging clutch (31) opens and closes smoothly.

2. Control system according to claim 1, characterised in that when the functional pressure line (41) is vented, the converter pressure valve (1) reduces the system pressure (system pressure line 8) and directs it to the torque converter (3) for filling it and for opening and closing the converter bridging clutch (31), the return flow of the converter medium is effected via radiator (6) and the converter clutch valve (2) into the lubrication system (7) of the mechanical transmission.

3. Control system according to claim 1, characterised in that for a buildup in functional pressure in the functional pressure line (41) and depending upon
- the converter pressure valve (1) closing the system pressure line (8) and venting the pressure line (9) to the torque converter (3),
- the converter clutch valve (2) directs the system pressure via the radiator (6) into the operating chamber (35) of the torque converter (31) and establishes a connection from the throttled system pressure (throttle 81) to the lubrication system (7).

4. Control system according to claim 1, characterised in that for a drop in functional pressure and depending upon
- the converter pressure valve (1) closing the vent of the torque converter (3) and supplying the modulated system pressure to the torque converter (3) thereby opening the converter bridging clutch (31),
- the converter clutch valve (2) shuts off the system pressure and allows medium to return from the torque converter (3) via the radiator (6) into the lubrication system (7) of the mechanical transmission.

5. Control system according to claim 1, characterised in that an electronic unit (5), a solenoid valve (4), a converter pressure valve (1) and converter clutch valve (2) and a torque converter (3) with bridging clutch (31) are provided, that the converter pressure valve (1) is arranged in a housing (11) comprising four annular chambers (18 A to 18 D) and one spring chamber (15 A), a piston slide (12) with two piston valves (13, 14) and a spring (15) guided on the same, and the converter clutch valve is arranged in a housing (21) with six annular chambers (28 A to 28 F) and one spring chamber (27 A), a piston slide (22) with four piston valves (23, 24, 25, 26) and a spring (27) guided on the same, the two being connected as follows:
- the electronic unit (5) via a control line (51) with the solenoid valve (4),
- the solenoid valve (4) provided with a pressure medium line (42) and a venting line (43) via a functional pressure line (41) with the annular chamber (18 C) of the converter pressure valve (1) and an annular chamber (28 F) of the converter clutch valve (2),
- the converter pressure valve (1) connected with a venting line (17, annular chamber 18 D) and a system pressure line (8, annular chamber 18 A) via a pressure line (9) with annular chamber (28 E) of the converter clutch valve (2) and a piston chamber (32) of the converter bridging clutch (31) in the torque converter (3),
- the converter clutch valve (2) connected directly with a system pressure line (8, annular chamber 28 A), with a throttled (throttle 81, annular chamber 28 D) system pressure line and a lubrication system (7, annular chamber 28 C) for the mechanical transmission via a line (61) from the annular chamber (28 B) with the spring chamber (27 A) and via the radiator (6) with the operating chamber (35) of the torque converter (3).

## Revendications

1. Dispositif de commande d'un convertisseur de couple (3) pourvu d'un embrayage de prise directe (31) et d'un circuit de lubrifiant (7) dans une transmission mixte hydrodynamique et mécanique, dans lequel une pression fonctionnelle produit respectivement, à travers un dispositif de soupapes de commande, le remplissage du convertisseur de couple (3) et la fermeture de l'embrayage de prise directe (31) du convertisseur, et dans lequel une électrovanne (4) commandée par une unité électronique (5) suivant un procédé de modulation par impulsions influence la pression de commande du dispositif de soupapes de commande, caractérisé en ce qu'il comporte, entre ladite électrovanne (4) et le convertisseur de couple (3), une soupape (1) de commande du convertisseur et une soupape (2) de commande de l'embrayage du convertisseur, chacune de ces soupapes étant alimentée par une pression d'alimentation (conduite d'alimentation 8), et en ce que ces deux soupapes sont commandées au moyen d'une conduite de pression fonctionnelle (41) qui leur est commune, venant de l'électrovanne (4), pour le remplissage du convertisseur de couple (3) et pour l'actionnement de l'embrayage de prise directe (31), et en ce que l'enclenchement et le déclenchement de l'électrovanne (4) se font par le procédé de modulation d'impulsions de telle manière que la pression fonctionnelle augmente et diminue de manière retardée et ouvre ou ferme en douceur l'embrayage de prise directe (31).

2. Dispositif de commande selon la revendication 1, caractérisé en ce que, quand la conduite de pression fonctionnelle (41) est déchargée, la soupape (1) de commande du convertisseur réduit la pression d'alimentation (conduite d'alimentation 8) et la transmet au convertisseur de couple (3) pour remplir celui-ci et pour ouvrir et maintenir ouvert l'embrayage de prise directe (31), le retour du fluide du convertisseur se faisant par le radiateur (6) et la soupape (2) de commande de l'embrayage, jusqu'au système de lubrification. (7) de la transmission mécanique.

3. Dispositif de commande selon la revendication 1, caractérisé en ce que, quand une pression fonctionnelle se développe dans la conduite de pression fonctionnelle (41) et en fonction de cela,
— la soupape (1) de commande du convertisseur ferme la conduite d'alimentation (8) et décharge la conduite de pression (9) allant au convertisseur de couple (3),
— la soupape (2) de commande du convertisseur transmet la pression d'alimentation, à travers le radiateur (6), à la chambre de travail (35) du convertisseur de couple (3) et ferme l'embrayage (31) du convertisseur, et établit en outre une liaison entre la pression d'alimentation réduite (étranglement 81) et le système de lubrification (7).

4. Dispositif de commande selon la revendication 1, caractérisé en ce que, quand la pression fonctionnelle décroît et en fonction de cela,
— la soupape (1) de commande du convertisseur ferme la mise en décharge du convertisseur de couple (3) et délivre la pression d'alimentation modulée au convertisseur de couple (3) de façon à ouvrir l'embrayage de prise directe (31),
— la soupape (2) de commande de l'embrayage bloque la pression d'alimentation et ouvre le retour du fluide du convertisseur de couple (3) par le radiateur (6) vers le système de lubrification (7) de la transmission mécanique.

5. Dispositif de commande selon la revendication 1, caractérisé en ce qu'il comporte une unité électronique (5), une électrovanne (4), une soupape (1) de commande du convertisseur, une soupape (2) de commande d'embrayage du convertisseur et un convertisseur de couple (3) pourvu d'un embrayage de prise directe (31), en ce que la soupape (1) de commande du convertisseur comporte, dans un corps (11) ayant quatre chambres annulaires (18 A à 18 D) et une chambre à ressort (15 A), un tiroir à pistons (12) pourvu de deux pistons de commande (13, 14) et un ressort (15) monté sur celui-ci, en ce que la soupape de commande d'embrayage comporte, dans un corps (21) pourvu de six chambres annulaires (28 A à 28 F) et d'une chambre à ressort (27 A), un tiroir à pistons (22) pourvu de quatre pistons de commande (23, 24, 25, 26) et un ressort (27) monté sur celui-ci, ces éléments étant reliés mutuellement comme suit:
— l'unité électronique (5) est reliée à l'électrovanne (4) par une ligne de commande (51),
— l'électrovanne (4), pourvue d'une conduite d'alimentation (42) et d'une conduite de décharge (43), est reliée par une conduite de pression fonctionnelle (41) à la chambre annulaire (18 C) de la soupape (1) de commande du convertisseur et à une chambre annulaire (28 F) de la soupape (2) de commande d'embrayage,
— la soupape (1) de commande du convertisseur, raccordée à une conduite de décharge (17, chambre annulaire 18 D) et à une conduite de pression d'alimentation (8, chambre annulaire 18 A), est reliée par une conduite à pression (9) à la chambre annulaire (28 E) de la soupape (2) de commande d'embrayage et à une chambre à piston (32) de l'embrayage de prise directe (31) dans le convertisseur de couple (3),
— la soupape (2) de commande d'embrayage, raccordée à une conduite de pression d'alimentation (8, chambre annulaire 28 A) d'une manière directe, ainsi qu'à une conduite d'alimentation à pression réduite (étranglement 81, chambre annulaire 28 D) et à un système de lubrification (7, chambre annulaire 28 C) de la transmission mécanique, est reliée par la conduite (61) issue de la chambre annulaire (28 B) à la chambre à ressort (27 A) et à la chambre de travail (35) du convertisseur de couple (3) à travers le radiateur (6).